# EUROPEAN PATENT SPECIFICATION

(11) **EP 4 138 423 B1**
(45) Date of publication and mention of the grant of the patent: **05.08.2026**
(21) Application number: 21788492.3
(22) Date of filing: 14.04.2021
(51) Int. Cl.: H04W 4/06, H04W 76/40, H04W 64/00, H04W 76/12

(54) **MULTICAST/BROADCAST INFORMATION TRANSMISSION METHODS, STORAGE MEDIUM, AND ELECTRONIC DEVICE**
MULTICAST-/BROADCAST-INFORMATIONSÜBERTRAGUNGSVERFAHREN, SPEICHERMEDIUM UND ELEKTRONISCHE VORRICHTUNG
PROCÉDÉS DE TRANSMISSION D'INFORMATIONS DE DIFFUSION/MULTIDIFFUSION, SUPPORT D'ENREGISTREMENT ET DISPOSITIF ÉLECTRONIQUE

(30) Priority: 15.04.2020 CN 202010297269
(43) Date of publication of application: 22.02.2023
(73) Proprietor: ZTE Corporation, Shenzhen, Guangdong 518057 (CN)
(72) Inventor: CHEN, Lin, Shenzhen, Guangdong 518057 (CN); MA, Zijiang, Shenzhen, Guangdong 518057 (CN); QI, Tao, Shenzhen, Guangdong 518057 (CN); WANG, Liping, Shenzhen, Guangdong 518057 (CN); ZHU, Hao, Shenzhen, Guangdong 518057 (CN); CAO, Kun, Shenzhen, Guangdong 518057 (CN)
(74) Representative: Vossius & Partner Patentanwälte Rechtsanwälte mbB
(86) International application number: PCT/CN2021/087260
(87) International publication number: WO 2021/208975

(56) References cited:
- WO-A1-2016/041135
- CN-A- 107 040 995
- CN-A- 111 866 751
- US-A1- 2013 163 500
- US-A1- 2018 192 255
- "3rd Generation Partnership Project; Technical Specification Group Services and System Aspects; Study on architectural enhancements for 5G multicast-broadcast services (Release 17)", vol. SA WG2, no. V0.3.0, 29 January 2020 (2020-01-29), pages 1 - 37, XP051860857, Retrieved from the Internet <URL:ftp://ftp.3gpp.org/Specs/archive/23_series/23.757/23757-030.zip 23757-030_MCCclean.docx> [retrieved on 20200129]
- "3rd Generation Partnership Project; Technical Specification Group Radio Access Network; NG-RAN; Architecture description (Release 16)", vol. RAN WG3, no. V16.1.0, 31 March 2020 (2020-03-31), pages 1 - 50, XP051861367, Retrieved from the Internet <URL:ftp://ftp.3gpp.org/Specs/archive/38_series/38.401/38401-g10.zip 38401-g10.doc> [retrieved on 20200331]
- "3rd Generation Partnership Project; Technical Specification Group Services and System Aspects; Multimedia Broadcast/Multicast Service (MBMS); Architecture and functional description (Release 16)", vol. SA WG2, no. V16.1.0, 24 September 2019 (2019-09-24), pages 1 - 77, XP051784659, Retrieved from the Internet <URL:ftp://ftp.3gpp.org/Specs/archive/23_series/23.246/23246-g10.zip 23246-g10.doc> [retrieved on 20190924]

## Description

### TECHNICAL FIELD

The present disclosure relates to the field of communications, and for example, a multicast/broadcast information transmission method, a storage medium, and an electronic device.

### BACKGROUND

With the continuous development of 5th generation mobile networks (5G), 5G schemes for various application scenarios are speeding up for completion. Multicast/broadcast service scenarios are traditional service scenarios that exist to satisfy the demands of most users for the same service.

5G-related technologies that have been discussed and standardized in the industry are mainly concerned with unicast service scenarios, i.e., point to point (PTP) service modes. A standardized discussion of a point to multipoint (PTM) service mode has not yet been expanded. In addition, with the rapid increase of the user quantity and multidimensionality of application scenarios, the point to multipoint service mode is inevitably one of the indispensable service modes.

Therefore, how to reasonably and effectively achieve the multicast/broadcast service under the technical framework of 5G-new radio (5G-NR) is a problem to be discussed and solved urgently.

For the problem of how to configure a multicast/broadcast service area in the related technology, no effective scheme has been provided yet.

3GPP, TR 23.757 relates to a study on architectural enhancements for 5G multicast-broadcast services.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional.

Embodiments of the present disclosure provide a multicast/broadcast information transmission method and device, a storage medium, and an electronic device, to at least solve the problem of configuring a multicast/broadcast service area in the related technology.

According to an embodiment of the present disclosure, a multicast/broadcast information transmission method is provided. The method includes that first multicast/broadcast information containing multicast/broadcast service area configuration information is sent to a first network element; or that second multicast/broadcast information containing multicast/broadcast service area configuration information from a first network element is received.

According to another embodiment of the present disclosure, a multicast/broadcast information transmission method is further provided. The method includes that fourth multicast/broadcast information containing multicast/broadcast service area configuration information is sent to a distributed unit (DU); and/or fifth multicast/broadcast information containing multicast/broadcast service area configuration information from a DU is received.

According to another embodiment of the present disclosure, a multicast/broadcast information transmission device is provided. The device includes a first sending module or a first receiving module. The first sending module is configured to send first multicast/broadcast information containing multicast/broadcast service area configuration information to a first network element. The first receiving module is configured to receive second multicast/broadcast information containing multicast/broadcast service area configuration information from a first network element.

According to another embodiment of the present disclosure, a multicast/broadcast information transmission device is provided. The device includes a second sending module and/or a second receiving module. The second sending module is configured to send third multicast/broadcast information containing multicast/broadcast service area configuration information to a DU. The second receiving module is configured to receive fourth multicast/broadcast information containing multicast/broadcast service area configuration information from a DU.

According to yet another embodiment of the present disclosure, a computer-readable storage medium is further provided. The computer-readable storage medium stores a computer program, where the computer program is configured to, when executed, perform any one of the method embodiments described above.

According to yet another embodiment of the present disclosure, an electronic device is further provided. The electronic device includes a memory and a processor. The memory stores a computer program, and the processor is configured to execute the computer program to perform any one of the method embodiments described above.

According to the present disclosure, the configuration of the multicast/broadcast service area is achieved by sending the first multicast/broadcast information containing the multicast/broadcast service area configuration information to the first network element or receiving the second multicast/broadcast information containing the multicast/broadcast service area configuration information from the first network element, that is, a manner of configuring the multicast/broadcast service area is explicitly proposed, whereby the problem of configuring the multicast/broadcast service area in the related technology is solved.

### BRIEF DESCRIPTION OF DRAWINGS

FIG. 1 is a schematic diagram of a service area according to an embodiment of the present disclosure;
FIG. 2 is a schematic diagram of a multicast/broadcast information transmission method according to an embodiment of the present disclosure;
FIG. 3 is a flowchart of an interaction between a base station and a multi-cell/multicast coordination entity (MCE) according to an embodiment of the present disclosure;
FIG. 4 is a flowchart of an interaction between an MCE and an access and mobility management function (AMF) according to an embodiment of the present disclosure;
FIG. 5 is a flowchart of multicast/broadcast session setup initiated by a next generation core network (NGC) according to an embodiment of the present disclosure;
FIG. 6 is a flowchart of multicast/broadcast session processing according to an embodiment of the present disclosure;
FIG. 7 is a schematic diagram of another multicast/broadcast information transmission method according to an embodiment of the present disclosure;
FIG. 8 is a schematic diagram of a configuration of a multicast/broadcast service area according to an embodiment of the present disclosure;
FIG. 9 is a schematic diagram of a configuration of another multicast/broadcast service area according to an embodiment of the present disclosure;
FIGS. 10A to 10D are flowcharts of an interaction between a centralized unit (CU) and a distributed unit (DU) according to an embodiment of the present disclosure;
FIG. 11 is a structural block diagram of a multicast/broadcast information transmission device according to an embodiment of the present disclosure; and
FIG. 12 is a structural block diagram of another multicast/broadcast information transmission device according to an embodiment of the present disclosure.

### DETAILED DESCRIPTION

The present disclosure will hereinafter be described in conjunction with embodiments and with reference to the accompanying drawings.

The terms "first," "second," and the like in the Description and claims of the present disclosure, and in the foregoing drawings, are used for distinguishing between similar objects and not necessarily for describing a particular order or sequential order.

With the rise of multicast/broadcast video services, public safety groupcast communications, and vehicle-to-everything services, networks need to support a flexible and dynamic resource allocation between unicast and groupcast, and to support a standalone deployment of groupcast/broadcast networks. A flexible groupcast/broadcast service enables a 5G system to efficiently support the preceding services.

For the broadcast/groupcast services, a broadcast area of a traditional multimedia broadcast and multicast service (MBMS) is a service area composed of multiple cells, which may be nationwide, urban, or regional. The same or different content corresponding to the same MBMS service (identified by a temporary mobile group identifier (TMGI) or other identifiers for identifying the MBMS service or an MBMS session) may be broadcast in different regions. In long-term evolution (LTE), for the same MBMS service, MBMS sessions corresponding to different flow identifiers (IDs) need to be set up if different broadcast/groupcast content is sent in disjoint regions. For the MBMS broadcast service, a corresponding service area may be semi-statically determined according to the characteristics of the service when the network is deployed, and a corresponding service area ID (SAI) is configured for a related cell.

For some groupcast communications, such as public safety and vehicle to everything (V2X) (smart networked automotive technology) groupcast communications, the service area is related to the position of a group member joining a multicast group. Considering that the group member may move, this means that the service area corresponding to the groupcast communication is also changing, and a list of cells contained in the corresponding service area is also changing. For such a service, it is difficult to semi-statically configure the service area corresponding to the multicast service when the network is deployed, and it may only be dynamically adjusted according to the change of the geographic position of the group member.

In the 5G NR V2X, the SAI defines a range value for direct communication (PC5) V2X communications in a groupcast mode, and only best effort communications need to be ensured for a receiving user equipment (UE) not within the range specified by the range value. For a receiving UE within the range specified by the range value, parameter requirements of the PC5 quality of service (QoS) need to be ensured. For V2X communications transmitted over NR Uu multicast, there are likely to be similar range-related QoS requirements from the application, that is, it is not required that all members from the group members are ensured to obtain the groupcast information, only group member UEs within the range around a message source UE may obtain the corresponding groupcast information.

For broadcast V2X communications, it is generally only required to ensure that UEs in hundreds of meters around the UE sending a V2X message may receive the message, and reception of the message by a farther UE does not have any meaning, therefore, the concept of transmission range is also meaningful for NR Uu broadcast-based V2X message transmissions.

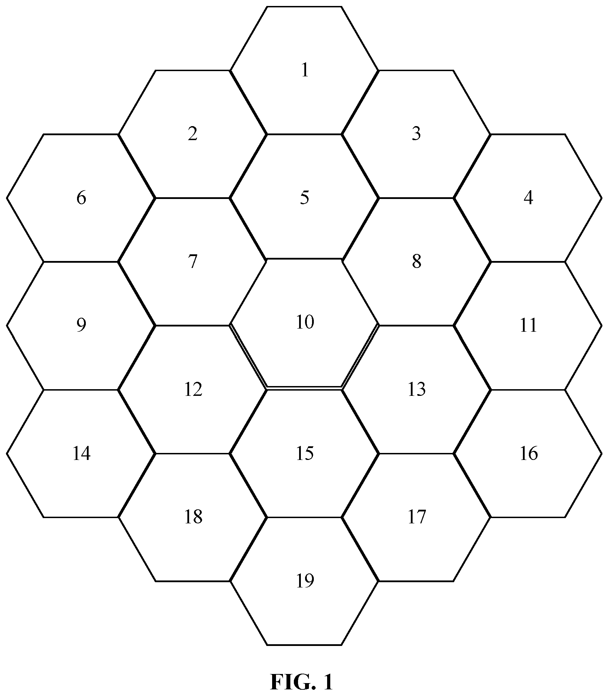

FIG. 1 is used as an example, FIG. 1 is a schematic diagram of a service area according to an embodiment of the present disclosure, where a broadcast range of a certain V2X message is affected by a geographic position, a broadcast range requirement, cell deployment and cell coverage of a UE sending the V2X message, for example:
for a V2X sending UE from cell 10, the broadcast range of its V2X message covers SAI1: cell {10, 5, 7, 8, 12, 13, 15};
for a V2X sending UE from cell 5, the broadcast range of its V2X message covers SAI2: cell {5, 1, 2, 3, 7, 8, 10};
for a V2X sending UE from cell 7, the broadcast range of its V2X message covers SAI3: cell {7, 2, 5, 6, 9, 10, 12};
for a V2X sending UE from cell 8, the broadcast range of its V2X message covers SAI4: cell {8, 3, 4, 5, 10, 11, 13};
for a V2X sending UE from cell 12, the broadcast range of its V2X message covers SAI5: cell {12, 7, 9, 10, 14, 15, 18};
for a V2X sending a UE from cell 13, the broadcast range of its V2X message covers SAI6: cell {13, 8, 10, 11, 15, 16, 17}; and
for a V2X sending a UE from cell 15, the broadcast range of its V2X message covers SAI7: cell {15, 10, 12, 13, 17, 18, 19}.

It can be seen from the above that, for V2X messages sent by UEs from cell 10 and cell 5, the broadcast ranges have overlapping cells, such as cell {5, 10, 7, 8}. This means that both service areas have an overlap. From a single-cell perspective, using cell 10 as an example, it may belong to SAIl, SAI2, SAI3, SAI4, SAI5, SAI6, and SAI7.

The following explains how to solve the problem of how to configure a multicast/broadcast service area existing in the related technology in connection with embodiments of the present disclosure.

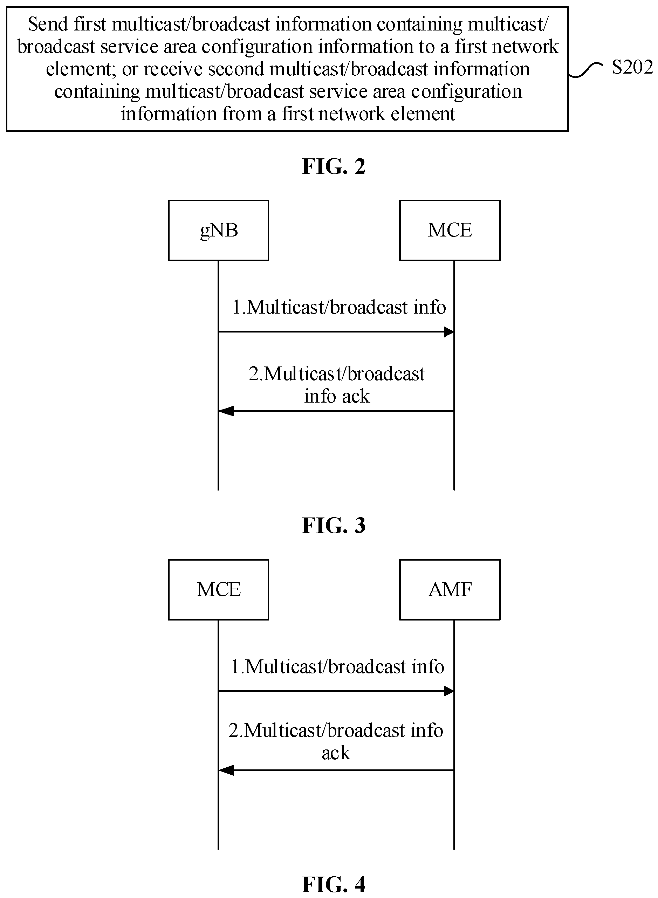

In an exemplary embodiment, a multicast/broadcast information transmission method is provided, as shown in FIG. 2, the method includes the followings.

In S202, first multicast/broadcast information containing multicast/broadcast service area configuration information is sent to a first network element; or, second multicast/broadcast information containing multicast/broadcast service area configuration information from a first network element is received.

The embodiment of the present application may be operated in a communication system including a base station and a core network element. It may be a 5G base station (gNB) that performs the above-described operations. The first network element may be a multicast/broadcast control unit (such as an MCE) or an AMF or other multicast/broadcast control network elements. The corresponding SAI related information may be configured by operation administration and maintenance (OAM) before sending the above-described first multicast/broadcast information to the first network element.

According to the present disclosure, the configuration of the multicast/broadcast service area is achieved by sending the first multicast/broadcast information containing the multicast/broadcast service area configuration information to the first network element or receiving the second multicast/broadcast information containing the multicast/broadcast service area configuration information from the first network element, that is, the manner of configuring the multicast/broadcast service area is explicitly proposed, whereby the problem of configuring the multicast/broadcast service area in the related technology is solved.

In an exemplary embodiment, that the second multicast/broadcast information containing the multicast/broadcast service area configuration information is received from the first network element includes that a multicast/broadcast session setup request message from the first network element is received, where the multicast/broadcast session setup request message includes the second multicast/broadcast information. In this embodiment, the gNB may receive the second multicast/broadcast information from the MCE or the AMF or other multicast/broadcast control network elements, where before the gNB receives the second multicast/broadcast information from the MCE, the MCE may firstly acquire related information sent by the AMF and then send the second multicast/broadcast information to the gNB. In this embodiment, the purpose of sending the second multicast/broadcast information to the gNB may be achieved in the manner of sending the information from a broadcast multicast service center (BMSC) to a multicast/broadcast gateway (multicast/broadcast GW), from the multicast/broadcast GW to the AMF, from the AMF to the MCE, and from the MCE to the gNB. Moreover, the purpose of sending the second multicast/broadcast information to the gNB may be achieved in the manner of sending information from the BMSC to the multicast/broadcast GW, from the multicast/broadcast GW to the AMF, and from the AMF to the gNB.

In an exemplary embodiment, the multicast/broadcast session setup request message includes at least one of the following information: a multicast/broadcast service identifier, a multicast/broadcast session identifier, one or more multicast/broadcast service areas, one or more multicast/broadcast cell lists, or one or more UE lists.

In an exemplary embodiment, the multicast/broadcast session setup request message includes one or more pieces of downlink general packet radio service tunnelling protocol-user (DL GTP-U) tunnel configuration information, and the one or more pieces of DL GTP-U tunnel configuration information include an Internet protocol (IP) groupcast address and a tunnelling endpoint identifier (TEID).

In an exemplary embodiment, in a case where different multicast/broadcast service identifiers, different service areas, and different general packet radio service tunnelling protocol-user tunnels are configured for multiple multicast/broadcast service areas, or in a case where the same multicast/broadcast service identifier, different service area identifiers, and different general packet radio service tunnelling protocol-user tunnels are configured for multiple multicast/broadcast service areas, the multicast/broadcast session setup request message includes multiple pieces of DL GTP-U tunnel configuration information; or in a case where the same multicast/broadcast service identifier, different service area identifiers, and the same GTP-U tunnel are configured for multiple multicast/broadcast service areas, the multicast/broadcast session setup request message includes one piece of DL GTP-U tunnel configuration information.

In an exemplary embodiment, the method further includes that a multicast/broadcast session setup response message is sent to the first network element, where the multicast/broadcast session setup response message includes at least one of the following information: one or more multicast/broadcast session identifiers, a multicast/broadcast service identifier, a service area identifier, a multicast/broadcast cell list, a UE list, or GTP-U tunnel configuration information. The GTP-U tunnel configuration information includes an Internet protocol (IP) address and a TEID.

In an exemplary embodiment, a GTP-U subheader of a data packet transmitted by a general packet radio service tunnelling protocol-user tunnel carries a multicast/broadcast area identifier.

In an exemplary embodiment, that the second multicast/broadcast information containing the multicast/broadcast service area configuration information from the first network element is received includes that a multicast/broadcast session update message from the first network element is received, where the multicast/broadcast session update message includes the second multicast/broadcast information; the second multicast/broadcast information includes at least one of the following information: a multicast/broadcast service identifier, a multicast/broadcast session identifier, an updated multicast/broadcast service area, an updated multicast/broadcast cell list, an updated UE list, or updated DL GTP-U tunnel configuration information; and the DL GTP-U tunnel configuration information includes an IP groupcast address and a TEID.

In an exemplary embodiment, the updated multicast/broadcast service area includes a newly added multicast/broadcast service area identifier and/or a released multicast/broadcast service area identifier.

In an exemplary embodiment, the updated multicast/broadcast cell list includes new radio cell global identifier (NCGI) information of a newly added cell and/or NCGI information of a released cell.

In an example embodiment, the updated UE list includes newly-added UE identifier information and/or released UE identifier information, where the UE identifier information includes a cell-radio network temporary identifier (C-RNTI), a serving-temporary mobile subscriber identifier (S-TMSI), a next generation (NG) UE application protocol (AP) identifier (ID) or other information for identifying a UE.

In an exemplary embodiment, one or more multicast/broadcast service areas included in the multicast/broadcast service area list include at least one of the following information: a broadcast/groupcast range, whether the multicast/broadcast service area is located within a quality of service (QoS) range, QoS information, a reliability requirement, a rate requirement, a retransmission indication, or a hybrid automatic repeat request (HARQ) feedback indication.

In an exemplary embodiment, when the first multicast/broadcast information containing the multicast/broadcast service area configuration information is sent to the first network element, the first multicast/broadcast information includes at least one of the following information: a base station identifier, a base station name, a multicast/broadcast service identifier, one or more multicast/broadcast service area identifiers, one or more cell identifier lists, a multicast/broadcast service area identifier list corresponding to each cell, or a UE list.

In an exemplary embodiment, in a case of sending the first multicast/broadcast information containing the multicast/broadcast service area configuration information to the first network element, the method further includes that the first network element is instructed to perform a first processing on a multicast/broadcast service area configuration through a first message; and the first processing includes at least one of setup, modification or release. In this embodiment, an interface corresponds to an interface between the gNB and the first network element.

In an exemplary embodiment, in a case where the first network element includes the MCE, after the first multicast/broadcast information is sent to the MCE, the method further includes that the MCE sends third multicast/broadcast information containing the multicast/broadcast service area configuration information to the AMF based on the first multicast/broadcast information. In this embodiment, the gNB may send relevant broadcast service area configuration information to the AMF through the MCE, that is, the MCE sends the related broadcast service area configuration information received from the gNB to the AMF.

In an exemplary embodiment, the third multicast/broadcast information includes at least one of the following information: an MCE identifier, an MCE name, a multicast/broadcast service identifier, one or more multicast/broadcast service area identifiers, one or more cell identifier lists, a multicast/broadcast service area identifier list corresponding to each cell, or a UE list.

In an exemplary embodiment, after the third multicast/broadcast information containing the multicast/broadcast service area configuration information is sent to the AMF by the MCE based on the first multicast/broadcast information, the method further includes that the AMF is instructed to perform a third processing on a multicast/broadcast service area configuration by the MCE through a third message; and the third processing includes at least one of setup, modification or release. In this embodiment, an interface corresponds to an interface between the MCE and the AMF.

The present disclosure will be described under conditions in conjunction with specific embodiments below.

For the multicast/broadcast service area, the following cases may be considered.

Scenario 1: for video services and other broadcast services, a corresponding service area may be semi-statically determined according to the characteristics of the services when a network is deployed, and a corresponding SAI is pre-configured for a related cell/base station. For a certain SAI, the SAI is composed of multiple cells, which may be nationwide, urban, or regional; or different broadcast content corresponds to the same multicast/broadcast service in disjoint regions.

Scenario 2: for the V2X-type broadcast communications, if a localized broadcast range is considered, for a certain multicast/broadcast service, multiple SAIs may be semi-statically configured for each receiving cell supporting the multicast/broadcast service, and the multiple SAIs correspond to broadcast ranges of V2X messages sent by sending UEs in different sending cells, respectively. Broadcast areas corresponding to these SAIs may have intersected cells.

Scenario 3: for the public safety and V2X groupcast communications, the service area is determined according to the position of a group member joining the groupcast communication group. The service area corresponds to one group cell list. The cell list of this service area changes as the position of the group member changes.

Scenario 4: for the V2X groupcast communications, if the transmission range configuration is considered, a cell list and service area 2 (SAI2) corresponding to a range may be delimited within a cell list corresponding to service area 1 (SAIl) determined by the whole group member according to the position of a UE sending a groupcast message. Groupcast transmissions within the area of SAI2 satisfy higher QoS requirements, for example, the reliability requirement is satisfied by HARQ feedback or the like.

### Specific embodiment one

For scenario 1, each cell may be pre-configured with SAI related information (corresponding to the aforementioned multicast/broadcast service area configuration information and corresponding to subsequent multicast/broadcast related information) corresponding to each cell by the OAM, and then the base station informs the MCE or the AMF or other multicast/broadcast control network elements of the corresponding SAI related information. The following information interaction may be included.

The base station sends multicast/broadcast related information to the MCE or other multicast/broadcast control network elements, where the multicast/broadcast related information includes at least one of the following information: a gNB ID, a gNB name, a cell NCGI list, or a multicast/broadcast service area list corresponding to each cell. Each service area entry in the multicast/broadcast service area list contains a multicast/broadcast service area identifier and/or multicast/broadcast service identifier information. The multicast/broadcast service identifier may identify one multicast/broadcast service or multicast/broadcast bearer service through the TMGI or other identifier information. The base station may setup/modify/release the configuration of the multicast/broadcast service area by using a radio access network (RAN) configuration update message or multicast/broadcast configuration update information or through interface-setup. An interface corresponds to an interface between the base station and the MCE.

After receiving the above information, the MCE may send an acknowledgement/response message to the base station. Subsequently, the MCE may determine to which service areas the base station belongs according to the multicast/broadcast related information sent by the base station, and decide whether to initiate a setup of the corresponding multicast/broadcast session with the base station.

The base station may also send the multicast/broadcast related information described above to the AMF. Similarly, the base station may setup/modify/release the configuration of multicast/broadcast service area through NG-setup or by using an RAN configuration update message or multicast/broadcast configuration update information. After receiving the multicast/broadcast related information, the AMF may send an acknowledgement/response message to the base station. Subsequently, the AMF may determine to which service areas the base station belongs according to the multicast/broadcast information sent by the base station, and decides whether to initiate the setup of the corresponding multicast/broadcast session with the base station. An interaction flow of the base station with the MCE may be seen in FIG. 3.

After receiving the multicast/broadcast related information, the MCE or other multicast/broadcast control network elements may send the multicast/broadcast related information to the AMF, for example, the MCE sends the multicast/broadcast related information, where the multicast/broadcast related information includes at least one of the following information: an MCE ID, an MCE Name, or a multicast/broadcast service area list supported by the MCE. Each service area entry in the multicast/broadcast service area list includes a multicast/broadcast service area identifier and/or multicast/broadcast service identifier information. The multicast/broadcast service identifier may identify one multicast/broadcast service or multicast/broadcast bearer service by the TMGI or other identifier information. The MCE or other multicast/broadcast control network elements may setup/modify/release the configuration of the multicast/broadcast service area by using the interface-Setup, or multicast/broadcast configuration update information. An interface corresponds to an interface between the AMF and the MCE or other multicast/broadcast control network elements.

After receiving the above-described multicast/broadcast related information, the AMF may send an acknowledgement/response message to the MCE or other multicast/broadcast control network elements. Subsequently, the AMF may determine to which service areas the MCE or other multicast/broadcast control network elements belong according to the multicast/broadcast information sent by the MCE or other multicast/broadcast control network elements, and decide whether to initiate the setup of the corresponding multicast/broadcast session with the MCE or other multicast/broadcast control network elements. Reference for an interaction flow of the MCE with the AMF may be made to FIG. 4.

### Specific embodiment two

For scenario 3, it may be considered that corresponding multicast/broadcast service area information is transmitted in a multicast/broadcast session setup process.

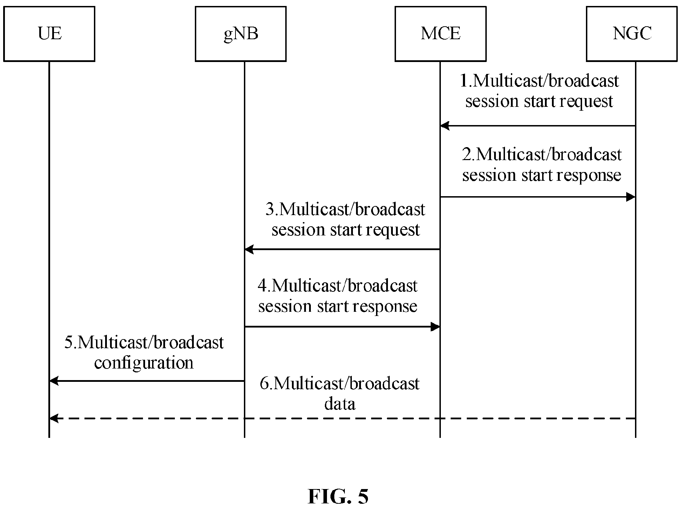

When a multicast/broadcast session is set up, the following information sending manner may be considered: multicast/broadcast related information may be included in a multicast/broadcast session setup request message, where the multicast/broadcast session setup request message is sent from the BMSC to the multicast/broadcast GW, from the multicast/broadcast GW to the AMF, from the AMF to the MCE, and then from the MCE to the gNB; or sent from the BMSC to the multicast/broadcast GW, from the multicast/broadcast GW to the AMF, and from the AMF to the gNB. The multicast/broadcast related information may include at least one of the following information: multicast/broadcast service identifier information, a multicast/broadcast session ID, a multicast/broadcast service area, or a multicast/broadcast cell list. The multicast/broadcast service identifier may identify one multicast/broadcast service or multicast/broadcast bearer service by the TMGI or other identifier information, and the multicast/broadcast cell list corresponds to the NCGI list, i.e., the multicast/broadcast cell list may be represented by the NCGI list. FIG. 5 presents a flow of a multicast/broadcast session setup request message containing the multicast/broadcast related information sent from the NGC (AMF) to the MCE and from the MCE to the gNB.

Given that an overlapping multicast/broadcast service area may occur, multiple multicast/broadcast service area lists and corresponding multicast/broadcast cell lists may be included in the multicast/broadcast session setup request message.

After receiving the multicast/broadcast related information, the gNB may send the multicast/broadcast configuration over the Uu interface via broadcast or proprietary signaling. The gNB performs the multicast/broadcast configuration within multicast/broadcast cells corresponding to multicast/broadcast service area associated with the multicast/broadcast sessions. The UE which serves or resides in these cells and is interested in the multicast/broadcast sessions/services may correspondingly setup multicast/broadcast bearers so as to receive multicast/broadcast data corresponding to the multicast/broadcast sessions.

Considering that the multicast/broadcast service area changes dynamically as the position of the group member changes, the multicast/broadcast service area corresponding to the multicast/broadcast session needs to be updated accordingly. The following information sending manner may be considered: the updated multicast/broadcast service area and/or multicast/broadcast cell list may be included in a multicast/broadcast session update message, and the multicast/broadcast session update message is sent from the BMSC to the multicast/broadcast GW, from the multicast/broadcast GW to the AMF, from the AMF to the MCE, and from the MCE to the gNB, or sent from the BMSC to the multicast/broadcast GW, from the multicast/broadcast GW to the AMF, and from the AMF to the gNB. The updated multicast/broadcast service area information includes a newly added or released multicast/broadcast service area identifier. The updated multicast/broadcast cell list includes newly added or released NCGI information.

For a base station/cell that is already not in the range of the multicast/broadcast service area, the following information sending manner may be considered: a multicast/broadcast session stop message ends the multicast/broadcast session, the multicast/broadcast session stop message is sent from the BMSC to the multicast/broadcast GW, from the multicast/broadcast GW to the AMF, from the AMF to the MCE, and from the MCE to the gNB; or sent from the BMSC to the multicast/broadcast GW, from the multicast/broadcast GW to the AMF, and from the AMF to the gNB.

### Specific embodiment three

For scenario 2 and scenario 4, multicast/broadcast service areas where an overlap may occur need to be considered. For this case, the following several possible processing manners may be considered.

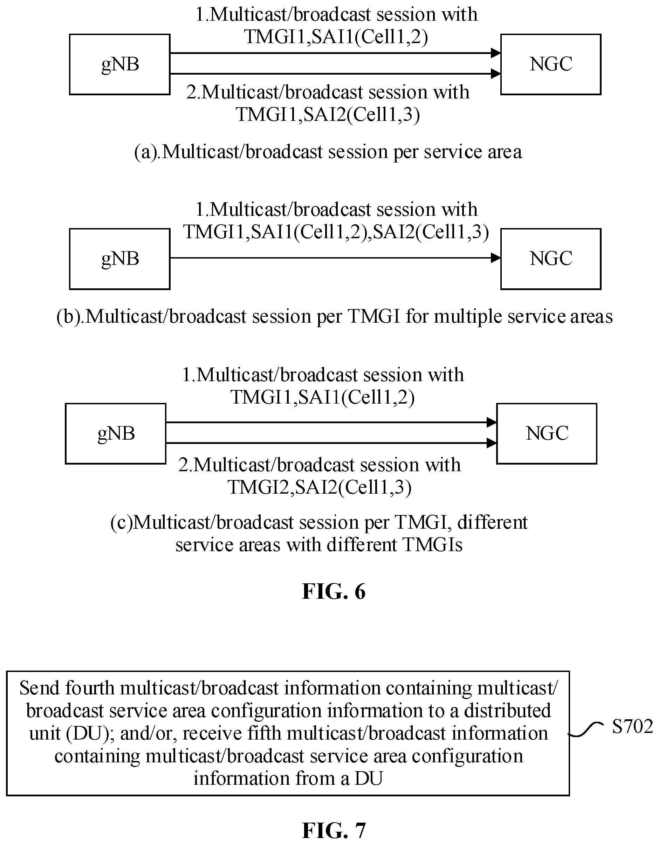

Manner one: for the same multicast/broadcast service, different multicast/broadcast service identifiers (or referred to as TMGIs or other identifiers for identifying multicast/broadcast services or bearer services) are configured for different multicast/broadcast service areas with an overlap, as shown in the flow (c) of FIG. 6.

One multicast/multicast session and one GTP-U tunnel are established between a user plane function (UPF)/multicast/broadcast GW and a gNB for each different TMGI. In this manner, the configuration requirement of the multicast/broadcast service identifier is greatly increased, and for a certain base station, this means that multiple multicast/broadcast service areas corresponding to the same multicast/broadcast service and having an overlap respectively establish a multicast/broadcast session and a GTP-U tunnel.

Manner two: for the same multicast/broadcast service, the same multicast/broadcast service identifier (or referred to as the TMGI or other identifiers for identifying a multicast/broadcast service or bearer service), different service area identifiers, and GTP-U tunnels are configured for different multicast/broadcast service areas with an overlap, and the GTP-U tunnels are used for transmitting different multicast/broadcast data, as shown in the flow (a) of FIG. 6. The multicast/broadcast service identifier and the SAI jointly determine one multicast/broadcast session/GTP-U tunnel, namely, different GTP-U tunnels and different multicast/broadcast sessions are established between the UPF/multicast/broadcast GW and the gNB.

This manner requires that the base station respectively establishes a multicast/broadcast session and a corresponding GTP-U tunnel between an NGC and multiple multicast/broadcast service areas, where the multiple multicast/broadcast service areas correspond to the same multicast/broadcast service and have an overlap. Since these multicast/broadcast sessions and GTP-U tunnels correspond to the same multicast/broadcast service identifier, after receiving multicast/broadcast data from the NGC through the DL GTP-U tunnel, the gNB may assemble data packets received from the GTP-U tunnel into a media access control (MAC) protocol data unit (PDU) and send the PDU on the Uu interface.

For the above manner one and manner two, from the signaling perspective, DL GTP-U tunnel configuration information corresponding to different multicast/broadcast service identifier and SAI combinations may be included in the multicast/broadcast session setup/update request information which is sent from the AMF to the MCE, and from the MCE to a gNB sending terminal, or sent from the AMF to the gNB. The DL GTP-U tunnel information contains the following information: an IP groupcast address and TEID information. Moreover, the multicast/broadcast session setup/update response information sent by the gNB to the NGC may include DL GTP-U tunnel configuration information for different multicast/broadcast service identifier and SAI combinations. This manner is suitable for transmitting multicast/broadcast data between the base station and the NGC in a unicast manner.

The multicast/broadcast session setup/update response message sent or received by the gNB and the NGC may include one or more multicast/broadcast session IDs, a multicast/broadcast service identifier, an SAI, and corresponding GTP-U tunnel configuration information.

Manner three: for the same multicast/broadcast service, the same multicast/broadcast service identifier (or referred to as the TMGI or other identifiers for identifying a multicast/broadcast service or bearer service) and different SAIs are configured for different multicast/broadcast service areas with an overlap, and these different multicast/broadcast service areas use the same multicast/broadcast session/GTP-U-tunnel for transmitting multicast/broadcast data, which corresponds to the flow (b) of FIG. 6.

This means that for the same multicast/broadcast service, no matter how many overlapping service areas are, one multicast/broadcast session and one GTP-U tunnel are established between the UPF/multicast/broadcast GW and gNBs related to the service areas. When the NGC (such as a UPF or a multicast/broadcast GW) sends multicast/broadcast data subsequently, service area information corresponding to a data packet is contained in the header of this user plane data packet. SAI information corresponding to the data packet may be added in a GTP-U packet header. After receiving this information, the gNB searches the multicast/broadcast cell list corresponding to the SAI according to the indication of the SAI, and determines in which cells the information is required to be transmitted.

From the signaling perspective, one multicast/broadcast session and GTP-U tunnel may be used for transmitting data packets corresponding to different multicast/broadcast service areas, this means that multiple multicast/broadcast service areas and corresponding multicast/broadcast cell lists may be included in the multicast/broadcast session setup request/update message transmitted between the gNB and the NGC. In the multicast/broadcast session setup/update request information sent from the AMF to the MCE and from the MCE to the gNB, or sent from the AMF to the gNB includes at least one of the following information: a multicast/broadcast session ID, a multicast/broadcast service identifier, an SAI list, a multicast/broadcast cell list, or DL GTP-U tunnel information. The DL GTP-U tunnel information contains an IP groupcast address and TEID information. Moreover, the multicast/broadcast session setup/update response information sent by the gNB to the NGC may include DL GTP-U tunnel configuration information for different multicast/broadcast service identifier and SAI combinations. This manner is suitable for transmitting multicast/broadcast data between the base station and the NGC in a unicast manner.

### Specific embodiment four

For scenario 4, the transmission of multicast data may reach the area of SAI1, but only the groupcast transmission within the area of SAI2 needs to satisfy QoS requirements, for example, reliability requirements are satisfied by supporting HARQ feedback.

When a multicast/broadcast session is set up, the following information sending manner may be considered: the multicast/broadcast session setup request message is sent from the BMSC to the multicast/broadcast GW, from the multicast/broadcast GW to the AMF, from the AMF to the MCE, and from the MCE to the gNB; or sent from the BMSC to the multicast/broadcast GW, from the multicast/broadcast GW to the AMF, and from the AMF to the gNB. The multicast/broadcast session setup request message includes a multicast/broadcast service area list. Each multicast/broadcast service area included in the multicast/broadcast service area list includes at least one of the following information: a broadcast/groupcast range, whether the multicast/broadcast service area is located within a QoS range, a QoS profile, a reliability requirement (such as a packet error rate (PER)), a rate requirement, a retransmission indication, HARQ feedback, or other indication information.

### Specific embodiment five

For scenario 1 and scenario 2, i.e., semi-static multicast/broadcast service area configuration scenarios, the AMF/MCE may also be considered to send multicast/broadcast related information to the gNB.

The gNB receives the multicast/broadcast related information from the AMF/MCE. The multicast/broadcast related information includes at least one of the following information: a multicast/broadcast service identifier (or referred to as the TMGI or other identifiers for identifying a multicast/broadcast service or bearer service), one or more multicast/broadcast service areas, one or more cell lists, one or more UE lists (identified by an S-TMSI, a UE AP ID, a C-RNTI, etc.). After receiving the UE list, the gNB only needs to send broadcast/groupcast data to a UE contained in the UE list.

The gNB may send an indication of supporting groupcast/broadcast to the AMF/MCE for the AMF to determine whether a multicast/broadcast session needs to be set up with the gNB.

In an exemplary embodiment, for a scenario where a centralized unit (CU) and a DU are separated, another multicast/broadcast information transmission method is further provided, as shown in FIG. 7, the method includes the following.

In S702, fourth multicast/broadcast information containing multicast/broadcast service area configuration information is sent to a DU; and/or, fifth multicast/broadcast information containing multicast/broadcast service area configuration information from a DU is received.

A CU may perform the above operations, the configuration of the multicast/broadcast service area is achieved through an interaction between the CU and the DU. In the above embodiments, a manner of how to configure the multicast/broadcast service area is explicitly proposed, whereby the problem of configuring the multicast/broadcast service area in the related technology is solved.

In an exemplary embodiment, the fourth multicast/broadcast information includes at least one of the following information: a multicast/broadcast service identifier, a multicast/broadcast session identifier, one or more pieces of multicast/broadcast service area identifier information, one or more multicast/broadcast cell lists, one or more user equipment lists, or F1 general packet radio service tunnelling protocol-user (GTP-U) tunnel configuration information.

In an exemplary embodiment, the F1 GTP-U tunnel configuration information includes an IP groupcast address and TEID information.

In an exemplary embodiment, for each multicast/broadcast service area or multicast/broadcast cell list or user equipment list included in the fourth multicast/broadcast information, the fourth multicast/broadcast information further includes at least one of the following information: a broadcast/groupcast range, whether the multicast/broadcast service area or multicast/broadcast cell list or user equipment list is located within a QoS range, a QoS configuration, a reliability requirement, a rate requirement, a retransmission indication, or a HARQ feedback indication.

In an exemplary embodiment, the fourth multicast/broadcast information includes at least one of the following information: a CU multicast/broadcast F1 application protocol identifier (F1 AP ID), a signaling radio bearer (SRB) to be setup, a multicast radio bearer (MRB) list to be setup, or centralized unit (CU) to distributed unit (DU) information.

In an example embodiment, the MRB list to be setup includes at least one of QoS configuration information of an MRB or QoS configuration information of a QoS flow.

In an exemplary embodiment, that the fourth multicast/broadcast information containing the multicast/broadcast service area configuration information is sent to the DU includes that the fourth multicast/broadcast information is sent to the DU through a first message. That the fifth multicast/broadcast information containing the multicast/broadcast service area configuration information from the DU is received includes that the fifth multicast/broadcast information sent by the DU through a second message is received. When the first message is a multicast/broadcast context setup request message, the second message is a multicast/broadcast context setup response message. When the first message is a multicast/broadcast context modification request message, the second message is a multicast/broadcast context modification response message. When the first message is a multicast/broadcast context release request message, the second message is a multicast/broadcast context release response message. Alternatively, that the fifth multicast/broadcast information containing the multicast/broadcast service area configuration information from the DU is received includes that a multicast/broadcast context modification request message from the DU is received, and the fifth multicast/broadcast information included in the multicast/broadcast context modification request message is acquired.

In an exemplary embodiment, the fifth multicast/broadcast information includes multicast/broadcast downlink user plane transport network layer (DL UP TNL) information.

In an exemplary embodiment, a GTP-U subheader of a data packet transmitted by the F1 GTP-U tunnel or the downlink user plane transmission network layer carries a multicast/broadcast area identifier.

In an exemplary embodiment, the fifth multicast/broadcast information includes at least one of the following information: a CU multicast/broadcast F1 AP ID, a DU multicast/broadcast F1 AP ID, a multicast/broadcast session identifier, a group radio network temporary identifier (G-RNTI), a multicast/broadcast service identifier, a DU to CU radio resource control (RRC) message, one or more pieces of multicast/broadcast service area identifier information, an MRB setup list, an MRB failed to setup list, multimedia broadcast and multicast service (MBMS) traffic channel (MTCH) scheduling information, a cell list supporting a multicast/broadcast session or a multicast/broadcast service area, a cell list not supporting a multicast/broadcast session or a multicast/broadcast service area, multicast/broadcast transmission channel scheduling related information, an inactivity timer, an on during timer, a scheduling cycle, or a scheduling offset.

In an exemplary embodiment, the MRB setup list includes a first MRB ID, a logical channel identifier (LCID), and a multicast/broadcast DL UP TNL message.

In an example embodiment, the MRB failed to setup list includes a second MRB ID and a cause value.

In an exemplary embodiment, the DU to CU RRC message includes configuration information of radio link control (RLC) corresponding to the MRB, configuration information of media access control (MAC) corresponding to the MRB, and configuration information of a logical channel corresponding to the MRB.

In an exemplary embodiment, the fifth multicast/broadcast information further includes at least one of the following information: updated multicast/broadcast service area information, updated MRB information, updated multicast/broadcast cell list information, updated multicast/broadcast user equipment list information, or updated F1 GTP-U tunnel information.

The multicast/broadcast area configuration in a CU/DU separation scenario is exemplified below in connection with specific embodiments.

### Specific embodiment six

In the CU/DU separation scenario, there are multiple cells under each DU. For a certain multicast/broadcast service area, it is possible to include cell 1 under a certain DU, but not include cell 2 and cell 3 under the DU. Therefore, the DU needs to acquire the cell list information corresponding to the multicast/broadcast service area, so as to perform reception control and data transmissions by the DU.

The CU sends multicast/broadcast related information to the DU. The multicast/broadcast related information includes multicast/broadcast session/bearer setup/modification/release information. The multicast/broadcast session/bearer setup/modification information may include at least one of the following information: a multicast/broadcast service identifier (or referred to as a TMGI or other identifiers for identifying a multicast/broadcast service or bearer service), a multicast/broadcast session ID/MRB ID, one or more multicast/broadcast service area identifiers, one or more pieces of multicast/broadcast cell list information, one or more pieces of UE list (may be identified by the C-RNTI or UE F1 AP ID, etc.) information, or F1 GTP-U tunnel information.

The DL GTP-U tunnel information contains the following information: an IP groupcast address and TEID information. Moreover, DL F1 GTP-U tunnel configuration information may be included in the multicast/broadcast session setup/update response information sent by the DU to the CU. This manner is suitable for transmitting multicast/broadcast data between the CU and the DU in a unicast manner.

For a scenario that multicast/broadcast data of multiple different multicast/broadcast service areas uses one F1 GTP-U tunnel, the F1-U data packet header sent from the CU to the DU should carry SAI information. After receiving the data packet, the DU may determine a corresponding cell list or UE list according to the SAI, and then send the data packet in a corresponding cell or to a corresponding UE.

The multicast/broadcast related information sent by the CU to the DU corresponding to a certain service area may include at least one of the following information: a broadcast/groupcast range, whether the service area is located within a QoS range, a QoS profile, a reliability requirement (such as the PER), a rate requirement, a retransmission indication, HARQ feedback, other indication information, whether a certain corresponding multicast/broadcast service area is located within the range, whether QoS needs to be ensured, or whether HARQ feedback is required.

The multicast/broadcast session setup/update response information sent by the DU to the CU may include one or more multicast/broadcast session IDs/multicast/broadcast bearer IDs, and/or a service area identifier, and/or a cell list, and/or UE list information about UEs that can and cannot support the reception of data of the multicast/broadcast sessions.

For the aforementioned semi-static multicast/broadcast service area configurations of scenario 1 and scenario 2, it may also consider configuring a corresponding SAI for the DU by the OAM. The DU sends each cell and corresponding multicast/broadcast service area information to the CU through an F1 interface.

### Specific embodiment seven

In the CU/DU separation scenario, after the CU maps the QoS flow contained in the multicast/broadcast session to the MRB, a corresponding F1 GTP-U tunnel needs to be set up with the DU for the multicast/broadcast data transmissions. The following MRB-based GTP-U tunnel setup manner may be considered.

For the non-overlapping multicast/broadcast service area, if only a non-overlapping multicast/broadcast service area is considered for a certain multicast/broadcast service identifier, multicast/broadcast data corresponding to different multicast/broadcast service areas may be mapped to one or more different MRBs, and the corresponding GTP-U tunnels on the F1 interface is established. After receiving the data packet of the GTP-U tunnel corresponding to the MRB, the DU delivers, according to the service area information associated with the GTP-U tunnel, the data packet to the corresponding cell for the Uu interface transmission.

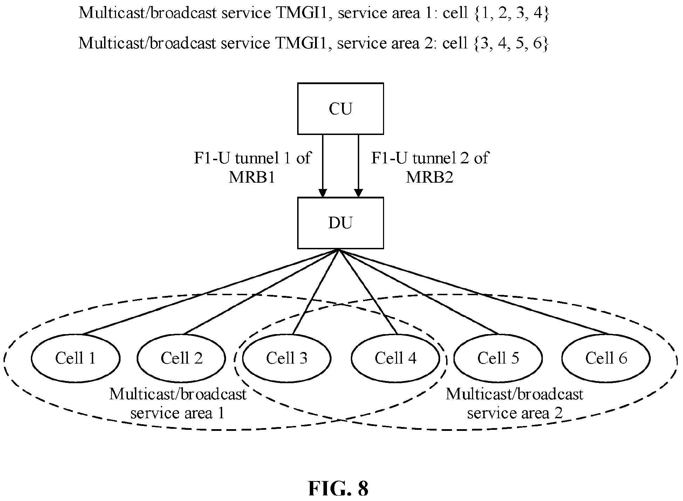

For the overlapping multicast/broadcast service area, as shown in FIG. 8, for a certain multicast/broadcast service, it is assumed that the service identifier is TMGI 1, and an overlapping multicast/broadcast service area exists. Service area 1 corresponds to cell 1, cell 2, cell 3, and cell 4, and service area 2 corresponds to cell 3, cell 4, cell 5, and cell 6. Assuming that the data corresponding to service area 1 is P1 and the data corresponding to service area 2 is P2, cell 1 and cell 2 need to send P1 on the Uu interface, cell 3 and cell 4 need to send P1+P2 on the Uu interface, and cell 5 and cell 6 need to send P2 on the Uu interface.

If multicast/broadcast data corresponding to different multicast/broadcast service areas is mapped to different MRBs, it means that two F1-U GTP-U tunnels need to be set up between the CU and the DU. For TMGI 1, multicast/broadcast data from two F1-U GTP-U tunnels and corresponding to MRB1 and MRB2 needs to be sent over cell 3 and cell 4, that is, for cells corresponding to two overlapping service areas of one TMGI, the DU needs to establish two logical channels for performing multicast/broadcast data transmissions.

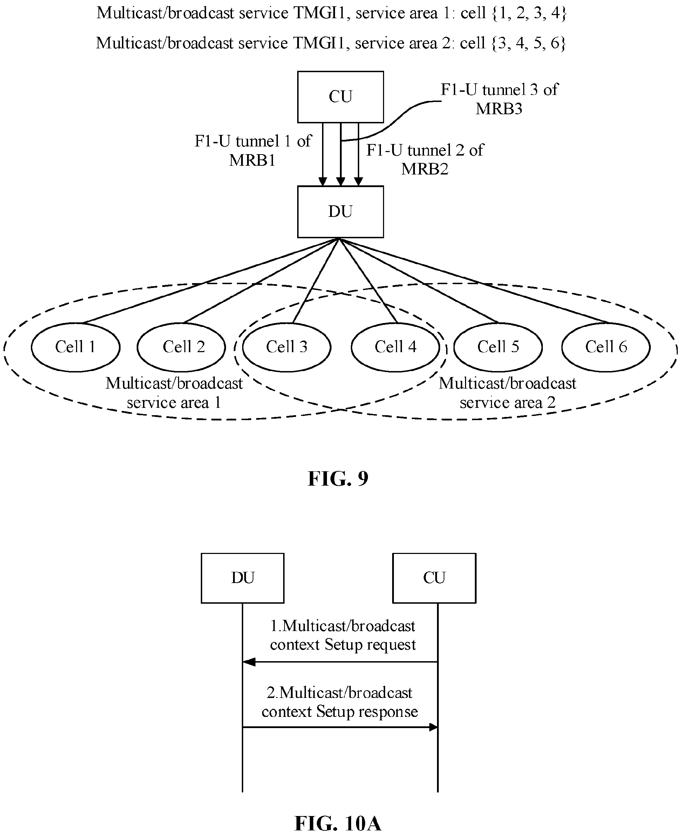

The F1-U GTP tunnel setup manner shown in FIG. 9 may also be considered, in which the CU aggregates multicast/broadcast data in service area 1 and multicast/broadcast data in service area 2 onto one MRB3, and establishes a dedicated GTP-U tunnel on the F1 interface for transmitting the multicast/broadcast data corresponding to TMGI 1 to cell 3 and cell 4. This means that the CU combines the multicast/broadcast data of the overlapping service areas on the F1 interface, then non-overlapping service areas are repartitioned on the F1 interface and the corresponding MRBs and GTP-U tunnels are established. That is, F1-U tunnel 1 for MRB1 corresponds to cell 1 and cell 2, F1-U tunnel 2 for MRB2 corresponds to cell 5 and cell 6, and F1-U tunnel 3 for MRB3 corresponds to cell 3 and cell 4. In this case, for one multicast/broadcast service, only one MRB and the corresponding logical channel need to be set up on the UE side.

In addition to the above two manners, one MRB and the corresponding F1-U tunnel may be established on the F1 interface for one multicast/broadcast service identifier (or referred to as the TMGI or other identifiers used for identifying the multicast/broadcast service or bearer service). The multicast/broadcast data corresponding to different service areas is uniformly numbered by the packet data convergence protocol (PDCP) serial number (SN), which may cause only PDCP PDUs corresponding to partial PDCP SNs to be transmitted for some cells, so that a PDCP SN hole occurs naturally in data transmissions.

For the above several manners of setting up MRBs and GTP-U tunnels corresponding to the service areas, it is necessary to design the setup, modification and release flows of multicast/broadcast related context between the CU and the DU. Considering that the DU controls the resource allocation, it is also necessary to consider whether the DU initiates to release or modify some MRBs.

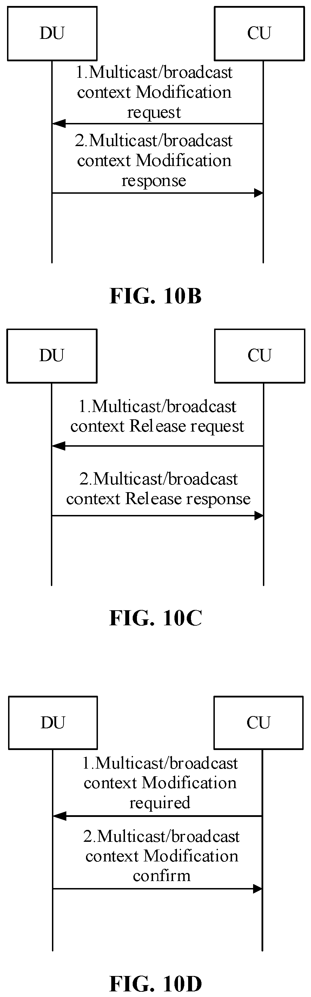

The multicast/broadcast context setup request is used as an example, as shown in FIG. 10A, the information sent by the CU to the DU may include at least one of the following information: a CU multicast/broadcast F1 AP ID, a multicast/broadcast service identifier (also referred to as the TMGI or other identifiers used for identifying the multicast/broadcast service or bearer service), a multicast/broadcast session ID, a multicast/broadcast service area, a multicast/broadcast cell list/UE list, an SRB to be setup, an MRB list to be setup, or CU to DU information. The MRB to be setup list may include a QoS profile of the MRB and/or the QoS profile information of the QoS flow.

Moreover, it is also possible to consider including multiple multicast/broadcast service areas and corresponding multicast/broadcast cell lists or UE lists in one multicast/broadcast context setup request.

For each multicast/broadcast service area, a corresponding MRB to be setup list may be included in the multicast/broadcast context setup request. If multicast/broadcast data corresponding to the MRB is transmitted in an IP multicast manner between the CU and multiple DUs, the transport network layer (TNL) information included in the multicast/broadcast context setup request message may further include an IP multicast address, an IP source address, and general packet radio service tunnelling protocol (GTP) DL TEID information. If the IP multicast manner is not used, the multicast/broadcast DL UP TNL info may be included in the multicast/broadcast context setup response message sent by the DU to the CU.

The multicast/broadcast context setup response message may include at least one of the following information: a CU multicast/broadcast F1 AP ID, a DU multicast/broadcast F1 AP ID, a multicast/broadcast session ID, a G-RNTI, a multicast/broadcast service identifier (or referred to as the TMGI or other identifiers used for identifying the multicast/broadcast service or bearer service), DU to CU RRC information, one or more multicast/broadcast service area identifiers, an MRB setup list, or an MRB failed to setup list. The MRB setup list contains an MRB ID, an LCID, and multicast/broadcast DL UP TNL info (GTP-U tunnel transport layer address, GTP-TEID). The MRB failed to setup list contains the MRB ID and the cause value. The DU to CU RRC information may include the configuration related to the logical channel and the RLC/MAC corresponding to the MRB. Moreover, the multicast/broadcast context setup response may further include MTCH scheduling related information, such as an inactive timer, an on duration timer, a scheduling cycle, and a scheduling offset.

Moreover, the multicast/broadcast context setup response message may contain a certain MRB/multicast/broadcast session/multicast/broadcast service area, and a cell list supporting the multicast/broadcast session/multicast/broadcast service area and/or a cell list not supporting the multicast/broadcast session/multicast/broadcast service area. The cell information is identified by using information such as the NCGI/physical cell identifier (PCI).

In addition to the flow of the multicast/broadcast context setup request/response, the multicast/broadcast context modification flow needs to be interacted between the CU and the DU. The modification may be initiated by the DU or by the CU. Moreover, the CU may also initiate a multicast/broadcast context release flow. In the multicast/broadcast context modification flow initiated by the CU or by the DU, the DU may send to the CU or the CU may send to the DU at least one of the following information: a CU multicast/broadcast F1 AP ID, a DU multicast/broadcast F1 AP ID, a multicast/broadcast session ID, a G-RNTI, a multicast/broadcast service identifier (the TMGI or other identifiers for identifying the multicast/broadcast service or bearer service), DU to CU RRC information, updated multicast/broadcast service area information, updated MRB information, updated multicast/broadcast cell list, UE list information, updated F1 GTP-U tunnel information, and so on.

After the DU completes the configuration of the multicast/broadcast bearer/multicast/broadcast session, the data packets received on the F1 GTP-U tunnel may subsequently be sent to the UE in the point-to-point mode or the point-to-multipoint mode

Through the description of the foregoing embodiments, it should be understood by those skilled in the art that the method according to the foregoing embodiments may be implemented by software plus a general hardware platform, and of course may also be implemented by hardware. Based on such understanding, the technical scheme of the present disclosure may be embodied in the form of a software product, the computer software product is stored in a storage medium (such as a read-only memory (ROM)/random access memory (RAM), a magnetic disk, an optical disk) and includes multiple instructions for enabling a terminal device (which may be a mobile phone, a computer, a server, or a network device) to execute the method described in the embodiments of the present disclosure.

In this embodiment, a multicast/broadcast information transmission device is further provided, the device is used for implementing the foregoing embodiments and optional embodiments, and details of which have been already described are not repeated. As used below, the term "module" may be a combination of software and/or hardware that implements a predetermined function. Although the device described in the embodiments below is implemented in software, an implementation in hardware or a combination of software and hardware is also possible and contemplated.

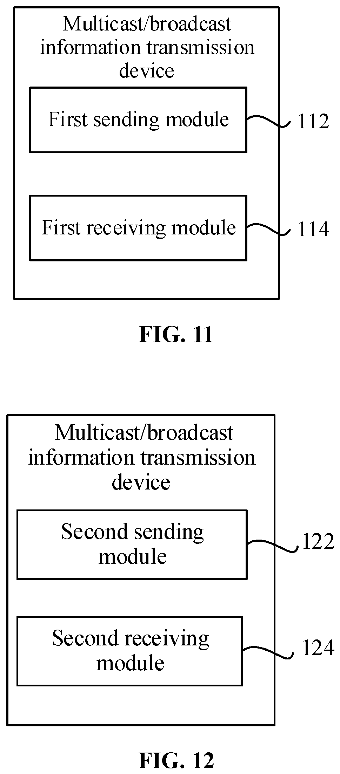

FIG. 11 is a structural block diagram of a multicast/broadcast information transmission device according to an embodiment of the present disclosure. As shown in FIG. 11, the device includes a first sending module 112 or a first receiving module 114. The first sending module 112 is configured to send first multicast/broadcast information containing multicast/broadcast service area configuration information to a first network element. The first receiving module 114 is configured to receive, from a first network element, second multicast/broadcast information containing multicast/broadcast service area configuration information.

In an exemplary embodiment, the first network element includes a multicast/broadcast control unit or an AMF.

In an exemplary embodiment, the first receiving module 114 may receive the second multicast/broadcast information containing the multicast/broadcast service area configuration information from the first network element in the following manner: a multicast/broadcast session setup request message from the first network element is received, where the multicast/broadcast session setup request message includes the second multicast/broadcast information.

In an exemplary embodiment, the multicast/broadcast session setup request message includes at least one of the following information: a multicast/broadcast service identifier, a multicast/broadcast session identifier, one or more multicast/broadcast service areas, one or more multicast/broadcast cell lists, or one or more UE lists.

In an exemplary embodiment, the multicast/broadcast session setup request message includes one or more pieces of downlink general packet radio service tunnelling protocol-user (DL GTP-U) tunnel configuration information, where the DL GTP-U tunnel configuration information includes an Internet protocol (IP) groupcast address and a tunnelling endpoint identifier (TEID).

In an exemplary embodiment, in a case where different multicast/broadcast service identifiers, different service areas, and different general packet radio service tunnelling protocol-user tunnels are configured for multiple multicast/broadcast service areas, or in a case where the same multicast/broadcast service identifier, different service area identifiers, and different general packet radio service tunnelling protocol-user tunnels are configured for multiple multicast/broadcast service areas, the multicast/broadcast session setup request message includes multiple pieces of DL GTP-U tunnel configuration information; or in a case where the same multicast/broadcast service identifier, different service area identifiers and the same GTP-U tunnel are configured for multiple multicast/broadcast service areas, the multicast/broadcast session setup request message includes one piece of DL GTP-U tunnel configuration information.

In an exemplary embodiment, in a case where the same multicast/broadcast service identifier, different service area identifiers, and the same GTP-U tunnel are configured for multicast/broadcast service areas with an overlap, the multicast/broadcast session setup request message further includes a multicast/broadcast session identifier, a multicast/broadcast service identifier, a service area identifier list and a multicast/broadcast cell list.

In an exemplary embodiment, the device is further configured to send a multicast/broadcast session setup response message to the first network element, where the multicast/broadcast session setup response message includes at least one of the following information: one or more multicast/broadcast session identifiers, a multicast/broadcast service identifier, a service area identifier, a multicast/broadcast cell list, a UE list, or general packet radio service tunnelling protocol-user (GTP-U) tunnel configuration information; where the GTP-U tunnel configuration information includes an Internet protocol (IP) address and a tunnelling endpoint identifier (TEID).

In an exemplary embodiment, a GTP-U subheader of a data packet transmitted by a GTP-U tunnel carries a multicast/broadcast service area identifier.

In an exemplary embodiment, the first receiving module 114 may receive the second multicast/broadcast information containing the multicast/broadcast service area configuration information from the first network element in the following manner: a multicast/broadcast session update message from the first network element is received, where the multicast/broadcast session update message includes the second multicast/broadcast information; the second multicast/broadcast information includes at least one of the following information: a multicast/broadcast service identifier, a multicast/broadcast session identifier, an updated multicast/broadcast service area, an updated multicast/broadcast cell list, an updated UE list, or updated DL GTP-U tunnel configuration information; and the DL GTP-U tunnel configuration information includes an Internet protocol (IP) groupcast address and a tunnelling endpoint identifier (TEID).

In an exemplary embodiment, the updated multicast/broadcast service area includes a newly added multicast/broadcast service area identifier and/or a released multicast/broadcast service area identifier.

In an exemplary embodiment, the updated multicast/broadcast cell list includes new radio cell global identifier (NCGI) information of a newly added cell or NCGI information of a released cell.

In an exemplary embodiment, the updated UE list includes newly-added UE identifier information and/or released UE identifier information, and the UE identifier information includes a cell-radio network temporary identifier (C-RNTI), a serving-temporary mobile subscriber identifier (S-TMSI), an NG UE AP ID, or other information for identifying the UE.

In an exemplary embodiment, the one or more multicast/broadcast service areas included in the multicast/broadcast service area list include at least one of the following information: a broadcast/groupcast range, whether the multicast/broadcast service area is located within a quality of service (QoS) range, QoS information, a reliability requirement, a rate requirement, a retransmission indication, or hybrid automatic repeat request (HARQ) feedback.

In an exemplary embodiment, when the first multicast/broadcast information containing the multicast/broadcast service area configuration information is sent to the first network element, the first multicast/broadcast information includes at least one of the following information: a base station identifier, a base station name, a multicast/broadcast service identifier, one or more multicast/broadcast service area identifiers, one or more cell identifier lists, a multicast/broadcast service area identifier list corresponding to each cell, or a UE list.

In an exemplary embodiment, in a case of sending the first multicast/broadcast information containing the multicast/broadcast service area configuration information to the first network element, the device is further configured to instruct, through a first message, the first network element to perform a first processing on a multicast/broadcast service area configuration; and the first processing includes at least one of setup, modification or release. In this embodiment, an interface corresponds to an interface between the gNB and the first network element.

In an exemplary embodiment, in a case where the first network element includes the MCE, after the first multicast/broadcast information is sent to the MCE, the MCE is configured to perform the following operations: the MCE sends third multicast/broadcast information containing the multicast/broadcast service area configuration information to the AMF based on the first multicast/broadcast information.

In an exemplary embodiment, the third multicast/broadcast information includes at least one of the following information: an MCE identifier, an MCE name, a multicast/broadcast service identifier, one or more multicast/broadcast service area identifiers, one or more cell identifier lists, a multicast/broadcast service area identifier list corresponding to each cell, or a UE list.

In an exemplary embodiment, after the MCE sends the third multicast/broadcast information containing the multicast/broadcast service area configuration information to the AMF based on the first multicast/broadcast information, the MCE is further configured to instruct the AMF to perform a third processing on a multicast/broadcast service area configuration through a third message; and the third processing includes at least one of setup, modification or release. In this embodiment, an interface corresponds to an interface between the MCE and the AMF.

FIG. 12 is a structural block diagram of another multicast/broadcast information transmission apparatus according to an embodiment of the present disclosure. As shown in FIG. 12, the device includes a second sending module 122 and/or a second receiving module 124. The second sending module 122 is configured to send fourth multicast/broadcast information containing multicast/broadcast service area configuration information to a distributed unit (DU). The second receiving module 124 is configured to receive, from a distributed unit (DU), fifth multicast/broadcast information containing multicast/broadcast service area configuration information.

In an exemplary embodiment, the fourth multicast/broadcast information includes at least one of the following information: a multicast/broadcast service identifier, a multicast/broadcast session identifier, one or more pieces of multicast/broadcast service area identifier information, one or more multicast/broadcast cell lists, one or more user equipment lists, or F1 general packet radio service tunnelling protocol-user (GTP-U) tunnel configuration information.

In an exemplary embodiment, the F1 GTP-U tunnel configuration information includes an Internet protocol (IP) groupcast address and tunnelling endpoint identifier (TEID) information.

In an exemplary embodiment, for each piece of multicast/broadcast service area identifier information, each multicast/broadcast cell list, or each user equipment list included in the fourth multicast/broadcast information, the fourth multicast/broadcast information further includes at least one of the following information: a broadcast/groupcast range, whether the one piece of information included in the fourth multicast/broadcast information is located within a quality of service (QoS) range, a QoS configuration, a reliability requirement, a rate requirement, a retransmission indication, or a hybrid automatic repeat request (HARQ) feedback indication.

In an exemplary embodiment, the fourth multicast/broadcast information includes at least one of the following information: a CU multicast/broadcast F1 AP ID, a signaling radio bearer (SRB) to be setup, a multicast radio bearer (MRB) list to be setup, or CU to DU information.

In an exemplary embodiment, the MRB list to be setup includes quality of service (QoS) configuration information of the MRB and/or QoS configuration information of a QoS flow.

In an exemplary embodiment, the second sending module 122 is configured to send the fourth multicast/broadcast information containing the multicast/broadcast service area configuration information to the distributed unit (DU) in the following manner: the fourth multicast/broadcast information is sent to the DU through a first message. The second receiving module 124 is configured to receive, from the distributed unit (DU), the fifth multicast/broadcast information containing the multicast/broadcast service area configuration information in the following manner: the fifth multicast/broadcast information sent from the DU is received through a second message. When the first message is a multicast/broadcast context setup request message, the second message is a multicast/broadcast context setup response message; when the first message is a multicast/broadcast context modification request message, the second message is a multicast/broadcast context modification response message; and when the first message is a multicast/broadcast context release request message, the second message is a multicast/broadcast context release response message. Alternatively, the second receiving module 124 is configured to receive, from the distributed unit (DU), the fifth multicast/broadcast information containing the multicast/broadcast service area configuration information in the following manner: a multicast/broadcast context modification request message from the DU is received; and the fifth multicast/broadcast information included in the multicast/broadcast context modification request message is acquired.

In an exemplary embodiment, the fifth multicast/broadcast information includes multicast/broadcast downlink user plane transport network layer (DL UP TNL) information.

In an exemplary embodiment, a GTP-U subheader of a data packet transmitted by the GTP-U tunnel or the DL UP TNL carries a multicast/broadcast area identifier.

In an exemplary embodiment, the fifth multicast/broadcast information includes at least one of the following information: a CU multicast/broadcast F1 AP ID, a DU multicast/broadcast F1 AP ID, a multicast/broadcast session identifier, a G-RNTI, a multicast/broadcast service identifier, a DU to CU radio resource control (RRC) message, one or more pieces of multicast/broadcast service area identification information, an MRB setup list, an MRB failed to setup list, MTCH scheduling information, a cell list supporting a multicast/broadcast session or a multicast/broadcast service area, a cell list not supporting a multicast/broadcast session or a multicast/broadcast service area, multicast/broadcast transmission channel scheduling related information, an inactivity timer, an on during timer, a scheduling cycle, or a scheduling offset.

In an exemplary embodiment, the MRB setup list includes a first MRB ID, an LCID, and a multicast/broadcast DL UP TNL message.

In an exemplary embodiment, the MRB failed to setup list includes a second MRB ID and a cause value.

In an exemplary embodiment, the DU to CU RRC message includes configuration information of RLC corresponding to the MRB, configuration information of MAC corresponding to the MRB, and configuration information of a logical channel corresponding to the MRB.

In an exemplary embodiment, the fifth multicast/broadcast information further includes at least one of the following information: updated multicast/broadcast service area information, updated MRB information, updated multicast/broadcast cell list information, updated multicast/broadcast user equipment list information, or updated F1 GTP-U tunnel information.

It should be noted that each of the above modules may be implemented by software or hardware, and for the latter, it may be implemented in the following manners, but not limited thereto: the above modules are all located in the same processor; or the modules described above are located in different processors in an arbitrary combination manner, respectively.

An embodiment of the present disclosure further provides a computer-readable storage medium. The computer-readable storage medium stores a computer program, where the computer program is configured to, when executed, perform any one of the method embodiments described above.

In this embodiment, the computer-readable storage medium described above may include, but is not limited to, a USB flash disk, a read-only memory (ROM), a random access memory (RAM), a removable hard disk, a magnetic disk, or an optical disk, among other various mediums in which a computer program may be stored.

An embodiment of the present disclosure further provides an electronic device. The electronic device includes a memory and a processor. The memory stores a computer program, and the processor is configured to execute the computer program to perform any one of the method embodiments described above.

The electronic device described above may further include a transmission apparatus and an input/output apparatus, the transmission apparatus is connected to the processor described above, and the input/output apparatus is connected to the processor described above.

Specific examples in this embodiment may be referred to as examples described in the above embodiments and optional embodiments, which are not described in detail in this embodiment.

Apparently, it should be understood by those skilled in the art that each of the above-described modules or steps of the present disclosure may be implemented by a general-purpose computing device, the modules or steps may be concentrated on a single computing device or distributed on a network composed of multiple computing devices, and optionally, the modules or steps may be implemented by program codes executable by the computing devices, so that the modules or steps may be stored in a storage device and executed by the computing device. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present disclosure is not limited to any specific combination of hardware and software.

## Claims

1. A multicast/broadcast information transmission method, comprising:
sending (S202), by a centralized unit, CU, to a distributed unit, DU, a multicast/broadcast context setup request message; and
receiving (S202), by the CU from the DU, a multicast/broadcast context setup response message, wherein the multicast/broadcast context setup request message includes a multicast/broadcast service area or a multicast/broadcast cell list.

2. The method of claim 1, wherein the multicast/broadcast context setup request message includes a downlink, DL, general packet radio service tunnelling protocol-user, GTP-U, tunnel configuration information that includes an Internet protocol, IP, groupcast address and a tunnelling endpoint identifier, TEID.

3. The method of claim 1, wherein the multicast/broadcast context setup response message includes:
a multicast/broadcast session identifier, a service area identifier, or
general packet radio service tunnelling protocol-user, GTP-U, tunnel configuration information,
wherein the GTP-U tunnel configuration information comprises an Internet protocol, IP, groupcast address and a tunnelling endpoint identifier, TEID.

4. The method of claim 1, further comprising:
receiving, from a first network element, an update message that comprises:
a multicast/broadcast session identifier,
an updated multicast/broadcast service area, or
an updated multicast/broadcast cell list.

5. The method of claim 1, wherein the multicast/broadcast information sent to the distributed unit, DU, comprises at least one of:
a multicast/broadcast session identifier,
a multicast/broadcast service area identifier information,
a multicast/broadcast cell list, or
a F1 general packet radio service tunnelling protocol-user, GTP-U, tunnel configuration information.

6. The method of claim 1, wherein the multicast/broadcast context setup request message includes a multicast radio bearer, MRB, list to be setup or CU to DU information.

7. The method of claim 6, wherein the MRB list to be setup comprises quality of service, QoS, configuration information of an MRB and QoS configuration information of a QoS flow.

8. A multicast/broadcast information transmission method, comprising:
sending, by a centralized unit, CU, to a distributed unit, DU, a multicast/broadcast context setup request message;
receiving, by the , CU, from the DU, a multicast/broadcast context setup response message that includes an MRB setup list with multicast/broadcast downlink, DL, user plane, UP, transport network layer, TNL, information, wherein a general packet radio service tunnelling protocol-user, GTP-U, subheader of a data packet transmitted by the DL UP TNL includes a multicast/broadcast service area identifier.

9. A multicast/broadcast information transmission method, comprising:
receiving, by a distributed unit, DU, from a centralized unit, CU, a multicast/broadcast context setup request message;
transmitting, by the DU, to the CU, a multicast/broadcast context setup response message that includes an MRB setup list with multicast/broadcast downlink, DL, user plane, UP, transport network layer, TNL, information, wherein a general packet radio service tunnelling protocol-user, GTP-U, subheader of a data packet transmitted by the DL UP TNL includes a multicast/broadcast service area identifier.

10. A computer-readable storage medium, storing a computer program, wherein the computer program is configured to, when executed, perform the method of any one of claims 1 to 7, 8 or 9.

11. An electronic device, comprising a memory and a processor, wherein the memory stores a computer program, and the processor is configured to execute the computer program to perform the method of any one of claims 1 to 7, 8 or 9.

## Patentansprüche

1. Multicast-/Broadcast-Informationsübertragungsverfahren, aufweisend:
Senden (S202), durch eine zentralisierte Einheit, CU, an eine verteilte Einheit, DU, einer Multicast-/Broadcast-Kontext-Einrichtungsanforderungsnachricht; und
Empfangen (S202), durch die CU von der DU, einer Multicast-/Broadcast-Kontext-Einrichtungsantwortnachricht, wobei die Multicast-/Broadcast-Kontext-Einrichtungsanforderungsnachricht einen Multicast-/Broadcast-Versorgungsbereich oder eine Multicast-/Broadcast-Zellenliste umfasst.

2. Verfahren nach Anspruch 1, wobei die Multicast-/Broadcast-Kontext-Einrichtungsanforderungsnachricht allgemeine Downlink-Paketfunkdienst-Tunnelprotokollbenutzer-Tunnelkonfigurationsinformationen, DL-GTP-U-Tunnelkonfigurationsinformationen, einschließt, die eine Internetprotokoll-Groupcast-Adresse, IP-Groupcast-Adresse, und eine Tunnelendpunktkennung, TEID, einschließt.

3. Verfahren nach Anspruch 1, wobei die Multicast-/Broadcast-Kontext-Einrichtungsantwortnachricht einschließt:
eine Multicast-/Broadcast-Sitzungskennung, eine Versorgungsbereichskennung oder
allgemeine Paketfunkdienst-Tunnelprotokollbenutzer-Tunnelkonfigurationsinformationen, GTP-U-Tunnelkonfigurationsinformationen,
wobei die GTP-U-Tunnelkonfigurationsinformationen eine Internetprotokoll-Groupcast-Adresse, IP-Groupcast-Adresse, und eine Tunnelendpunktkennung, TEID, aufweisen.

4. Verfahren nach Anspruch 1, ferner aufweisend:
Empfangen, von einem ersten Netzwerkelement, einer Aktualisierungsnachricht, die aufweist:
eine Multicast-/Broadcast-Sitzungskennung,
einen aktualisierten Multicast-/Broadcast-Versorgungsbereich, oder
eine aktualisierte Multicast-/Broadcast-Zellenliste.

5. Verfahren nach Anspruch 1, wobei die Multicast-/Broadcast-Informationen, die an die verteilte Einheit, DU, gesendet werden, mindestens eines aufweisen von:
einer Multicast-/Broadcast-Sitzungskennung,
Multicast-/Broadcast-Versorgungsbereich-Kennungsinformationen,
einer Multicast-/Broadcast-Zellenliste, oder
allgemeinen F1-Paketfunkdienst-Tunnelprotokollbenutzer-Tunnelkonfigurationsinformationen, F1-GTP-U-Tunnelkonfigurationsinformationen.

6. Verfahren nach Anspruch 1, wobei die Multicast-/Broadcast-Kontext-Einrichtungsanforderungsnachricht eine Multicast-Funkträgerliste, MRB-Liste, die einzurichten ist, oder CU-zu-DU-Informationen einschließt.

7. Verfahren nach Anspruch 6, wobei die MRB-Liste, die einzurichten ist, Dienstgüten-Konfigurationsinformationen, QoS-Konfigurationsinformationen, eines MRB und QoS-Konfigurationsinformationen eines QoS-Flusses aufweist.

8. Multicast-/Broadcast-Informationsübertragungsverfahren, aufweisend:
Senden, durch eine zentralisierte Einheit, CU, an eine verteilte Einheit, DU, einer Multicast-/Broadcast-Kontext-Einrichtungsanforderungsnachricht;
Empfangen, durch die CU von der DU, einer Multicast-/Broadcast-Kontext-Einrichtungsantwortnachricht, die eine MRB-Einrichtungsliste mit Multicast-/Broadcast-Downlink-Benutzerebenen-Transportnetzwerkschichtinformationen, Multicast-/Broadcast-DL-UP-TNL-Informationen, einschließt, wobei ein allgemeiner Paketfunktdienst-Tunnelprotokollbenutzer-Subheader, GTP-U-Subheader, eines Datenpakets, das durch die DL UP TNL übertragen wird, eine Multicast-/Broadcast-Versorgungsbereichskennung einschließt.

9. Multicast-/Broadcast-Informationsübertragungsverfahren, aufweisend:
Empfangen, durch eine verteilte Einheit, DU, von einer zentralisierten Einheit, CU, einer Multicast-/Broadcast-Kontext-Einrichtungsanforderungsnachricht;
Übertragen, durch die DU, an die CU, einer Multicast-/Broadcast-Kontext-Einrichtungsantwortnachricht, die eine MRB-Einrichtungsliste mit Multicast-/Broadcast-Downlink-Benutzerebenen-Transportnetzwerkschichtinformationen, Multicast-/Broadcast-DL-UP-TNL-Informationen, einschließt, wobei ein allgemeiner Paketfunktdienst-Tunnelprotokollbenutzer-Subheader, GTP-U-Subheader, eines Datenpakets, das durch die DL UP TNL übertragen wird, eine Multicast-/Broadcast-Versorgungsbereichskennung einschließt.

10. Computerlesbares Speichermedium, das ein Computerprogramm speichert, wobei das Computerprogramm konfiguriert ist, um, wenn es ausgeführt wird, das Verfahren nach einem der Ansprüche 1 bis 7, 8 oder 9 durchzuführen.

11. Elektronische Vorrichtung, aufweisend einen Speicher und einen Prozessor, wobei der Speicher ein Computerprogramm speichert und der Prozessor konfiguriert ist, um das Computerprogramm auszuführen, um das Verfahren nach einem der Ansprüche 1 bis 7, 8 oder 9 durchzuführen.

## Revendications

1. Procédé de transmission d'informations de multidiffusion/diffusion, comprenant :
l'envoi (S202), par une unité centralisée, CU, à une unité distribuée, DU, d'un message de demande de paramétrage de contexte de multidiffusion/diffusion ; et
la réception (S202), par la CU en provenance de la DU, d'un message de réponse de paramétrage de contexte de multidiffusion/diffusion, dans lequel le message de demande de paramétrage de contexte de multidiffusion/diffusion comporte une zone de service de multidiffusion/diffusion ou une liste de cellules de multidiffusion/diffusion.

2. Procédé selon la revendication 1, dans lequel le message de demande de paramétrage de contexte de multidiffusion/diffusion comporte des informations de configuration de tunnel de protocole utilisateur de tunnellisation de service général de radiocommunication par paquets, GTP-U, de liaison descendante, DL, qui comportent une adresse de diffusion de groupe de protocole Internet, IP, et un identifiant de terminal de tunnellisation, TEID.

3. Procédé selon la revendication 1, dans lequel le message de réponse de paramétrage de contexte de multidiffusion/diffusion comporte :
un identifiant de session de multidiffusion/diffusion, un identifiant de zone de service, ou
des informations de configuration de tunnel de protocole utilisateur de tunnellisation de service général de radiocommunication par paquets, GTP-U,
dans lequel les informations de configuration de tunnel GTP-U comprennent une adresse de diffusion de groupe de protocole Internet, IP, et un identifiant de terminal de tunnellisation, TEID.

4. Procédé selon la revendication 1, comprenant en outre :
la réception, en provenance d'un premier élément de réseau, d'un message de mise à jour qui comprend :
un identifiant de session de multidiffusion/diffusion,
une zone de service de multidiffusion/diffusion mise à jour, ou
une liste de cellules de multidiffusion/diffusion mise à jour.

5. Procédé selon la revendication 1, dans lequel les informations de multidiffusion/diffusion envoyées à l'unité distribuée, DU, comprennent au moins l'un parmi :
un identifiant de session de multidiffusion/diffusion,
des informations d'identifiant de zone de service de multidiffusion/diffusion,
une liste de cellules de multidiffusion/diffusion, ou
des informations de configuration de tunnel de protocole utilisateur de tunnellisation de service général de radiocommunication par paquets, GTP-U, F1.

6. Procédé selon la revendication 1, dans lequel le message de demande de paramétrage de contexte de multidiffusion/diffusion comporte une liste de porteuses radio de multidiffusion, MRB, à paramétrer ou des informations CU à DU.

7. Procédé selon la revendication 6, dans lequel la liste MRB à paramétrer comprend des informations de configuration de qualité de service, QoS, d'une MRB et des informations de configuration QoS d'un flux QoS.

8. Procédé de transmission d'informations de multidiffusion/diffusion, comprenant :
l'envoi, par une unité centralisée, CU, à une unité distribuée, DU, d'un message de demande de paramétrage de contexte de multidiffusion/diffusion ;
la réception, par la CU, en provenance de la DU, d'un message de réponse de paramétrage de contexte de multidiffusion/diffusion qui comporte une liste de paramétrage MRB avec des informations de couche de réseau de transport, TNL, de plan utilisateur, UP, de liaison descendante, DL, de multidiffusion/diffusion, dans lequel un sous-en-tête de protocole utilisateur de tunnellisation de service général de radiocommunication par paquets, GTP-U, d'un paquet de données transmis par la TNL UP DL comporte un identifiant de zone de service de multidiffusion/diffusion.

9. Procédé de transmission d'informations de multidiffusion/diffusion, comprenant :
la réception, par une unité distribuée, DU, en provenance d'une unité centralisée, CU, d'un message de demande de paramétrage de contexte de multidiffusion/diffusion ;
la transmission, par la DU, à la CU, d'un message de réponse de paramétrage de contexte de multidiffusion/diffusion qui comporte une liste de paramétrage MRB avec des informations de couche de réseau de transport, TNL, de plan utilisateur, UP, de liaison descendante, DL, de multidiffusion/diffusion, dans lequel un sous-en-tête de protocole utilisateur de tunnellisation de service général de radiocommunication par paquets, GTP-U, d'un paquet de données transmis par la TNL UP DL comporte un identifiant de zone de service de multidiffusion/diffusion.

10. Support de stockage lisible par ordinateur, stockant un programme informatique, dans lequel le programme informatique est configuré pour, lorsqu'il est exécuté, réaliser le procédé selon l'une quelconque des revendications 1 à 7, 8 ou 9.

11. Dispositif électronique, comprenant une mémoire et un processeur, dans lequel la mémoire stocke un programme informatique, et le processeur est configuré pour exécuter le programme informatique pour réaliser le procédé selon l'une quelconque des revendications 1 à 7, 8 ou 9.
